# FASCICULE DE BREVET EUROPEEN

(11) **EP 2 591 270 B1**
(45) Date de publication et mention de la délivrance du brevet: **29.07.2015**
(21) Numéro de dépôt: 11748438.6
(22) Date de dépôt: 06.07.2011
(51) Int. Cl.: F16L 41/06, F16L 41/12, F16L 55/172

(54) **COLLIER, DESTINÉ À CEINTURER UNE CANALISATION DE FLUIDE.**
HÜLLE ZUR UMMANTELUNG EINES ROHRS ZUR BEFÖRDERUNG EINES FLUIDS
COLLAR INTENDED TO ENCIRCLE A FLUID-CARRYING PIPE

(30) Priorité: 07.07.2010 FR 1002858
(43) Date de publication de la demande: 15.05.2013
(73) Titulaire: Etablissements Saint Germain Et Straub, 80210 Feuquieres-en-vimeu (FR)
(72) Inventeur: HELLE Jacky, F-80210 Feuqu Ieres en Vimeu (FR)
(74) Mandataire: Boubal, Denis Henri Jacques
(86) Numéro de dépôt international: PCT/FR2011/000399
(87) Numéro de publication internationale: WO 2012/004476

(56) Documents cités:
- DE-C1- 3 134 816
- FR-A- 1 260 979
- FR-A1- 2 933 764
- US-A- 3 687 490
- US-A- 4 705 078

## Description

L'invention concerne un collier, destiné à ceinturer une canalisation de fluide, et trouvera une application particulière pour soit obturer un orifice d'une canalisation, soit créer une dérivation sur une canalisation, soit réparer une fissure de la canalisation.

On connaît de l'état de la technique des colliers de dérivation, encore appelés « colliers de prise » qui permettent de créer une dérivation sur la canalisation. Ces colliers sont traditionnellement constitués d'une selle, rigide, destinée à être appliquée de manière étanche, via un joint, sur la canalisation en regard d'un orifice de piquage et d'une bride souple (ou bracelet) coopérant avec la selle pour le serrage du collier sur la canalisation.

De manière connue, la bride, constituée généralement à partir d'un feuillard métallique, est souple et est assujettie à la selle, pièce rigide, de fonderie notamment, voire de décolletage, par l'intermédiaire de moyens de fixation latéraux à ladite selle.

Ces moyens de fixation comportent des moyens de vissage pour serrer le collier, à savoir l'ensemble bride/selle sur la canalisation.

De tels colliers sont par exemple connus des documents FR-2.809.471, WO 99/32823, ou encore FR-2.933.764.

On connaît également des colliers de réparation constitués d'une bride souple, sous la forme d'une bande inox, d'une bande caoutchouc sur la surface intérieure de la bride, et d'un système vis/écrou permettant de serrer le collier sur une conduite. Par compression de la bande de caoutchouc, on peut ainsi obturer des fuites d'eau ou de gaz sur les canalisations.

Aujourd'hui, les colliers de réparation connus et commercialisés ne peuvent être utilisés que sur certains diamètres de canalisation. Il est ainsi nécessaire de proposer une gamme d'une vingtaine de colliers de réparation pour répondre aux réparations de canalisations dont le diamètre peut varier de 40 mm à 330 mm.

D'une manière générale, les colliers, de réparation ou de dérivation, sont installés dans des conditions difficiles, bien souvent en fond de fouille, en zone humide. De tels colliers se doivent d'être de pose aisée et notamment de pouvoir être ouverts puis fermés autour de la canalisation de manière aisée.

Il est ainsi connu du document FR-2.933.764 un collier de dérivation comprenant une selle rigide et une bride souple coopérant avec la selle pour ceinturer le collier sur la canalisation. La selle est une pièce de fonderie et comprend deux moyens de fixation latéraux à ladite selle, d'une part, un crochet destiné à engager avec des ouvertures sur la bride souple, et d'autre part, une fourche destinée à coopérer avec la tête d'une vis, en liaison rotule d'un système vis/écrou permettant de serrer le collier sur la canalisation.

Selon ce document FR-2.933.764, afin de pouvoir adapter le collier sur différents diamètres de conduite, la bride souple présente une pluralité d'ouvertures de réglage. Le crochet de fixation, latéral à la selle, est introduit dans l'ouverture la plus adaptée au diamètre de la canalisation sur laquelle le collier est destiné à être monté.

Afin de pouvoir être posé facilement, ce collier peut être ouvert sans avoir à dévisser et retirer complètement la vis de l'écrou, en déboîtant la liaison rotule sur l'autre moyen de fixation latérale.

On connaît ainsi du document FR-2.933.764 un collier de dérivation qui peut s'adapter à différents diamètres de conduite, grâce aux ouvertures de réglage le long de la bride, de pose aisée, qui ne nécessite pas, pour ouvrir et fermer le collier de dévisser complètement la vis de l'écrou. Toutefois, ce collier nécessite la présence d'une pièce de fonderie, à savoir la selle, ce qui augmente le coût de revient du collier. Par ailleurs, ce collier crée des discontinuités de cerclage sur la circonférence de la canalisation, et plus particulièrement deux discontinuités importantes de part et d'autre de la selle. Selon les constatations de l'inventeur, en raison de l'agencement particulier entre la selle et la bride souple, cette dernière ne vient en contact que très partiellement avec la circonférence de la canalisation. L'inventeur a ainsi constaté qu'un tel collier a pour conséquence d'ovaliser la canalisation semi-rigide sur laquelle il est monté.

Le but de la présente invention est de pallier les inconvénients précités en proposant un collier destiné à ceinturer une canalisation de fluide, qui puisse s'adapter à différents diamètres de canalisation, de pose aisée, et dont le coût de revient est inférieur à ceux de l'état de la technique.

Un autre but de l'invention est de proposer un collier dont la bride souple permet de ceinturer la totalité, voire la quasi-totalité de la canalisation sur laquelle il est monté.

D'autres buts et avantages de la présente invention apparaîtront au cours de la description qui va suivre qui n'est donnée qu'à titre indicatif et qui n'a pas pour but de la limiter.

Aussi, l'invention concerne un collier, destiné à ceinturer une canalisation de fluide, convenant pour soit obturer un orifice de la canalisation, soit créer une dérivation sur la canalisation, soit réparer une fissure de ladite canalisation, ledit collier comprenant :
- une bride souple destinée à ceinturer ladite canalisation,
- des moyens de vissage coopérant avec ladite bride souple pour serrer ledit collier sur ladite canalisation, comprenant au moins une vis et un écrou.

Selon l'invention :
- lesdits moyens de vissage comprennent une vis et un écrou, ou alternativement une tige filetée et deux écrous, le vissage de la vis sur l'écrou, ou desdits écrous sur ladite tige filetée permettant de serrer le collier sur la canalisation,
- le collier présente un corps d'accrochage présentant un alésage traversé par les moyens de vissage, muni de moyens d'accrochage destinés à coopérer avec au moins une zone de réception de la bride souple pour accrocher de manière amovible ladite bride souple, de telle façon à autoriser l'ouverture du collier sans dévisser complètement lesdits moyens de vissage,
- le collier présente des moyens de réglage de la longueur effective de ladite bride souple comprenant une pluralité d'ouvertures de réglage réparties sur la longueur de la bride souple, destinées pour le réglage de la position des moyens de vissage, ladite vis ou alternativement ladite tige filetée étant destinée à être insérée dans l'ouverture de réglage la plus adaptée au diamètre de la canalisation,
et dans lequel lorsque lesdits moyens d'accrochage agrippent la zone de réception de la bride souple, ledit collier permet de ceinturer la canalisation dans une position dudit corps d'accrochage où ledit corps d'accrochage ne prend pas appui sur la canalisation, le corps d'accrochage coopérant en butée avec la tête de la vis, ou alternativement, avec l'un des deux écrous vissés sur la tige filetée , et dans lequel l'écrou coopérant avec la vis ou alternativement, l'autre des deux écrous vissés sur ladite tige filetée étant destiné à engager en butée sur la surface extérieure de la bride souple.

Aussi, le collier conforme à l'invention est de pose aisée: il peut être ouvert ou fermé sans avoir à dévisser complètement les moyens de vissage notamment une vis d'un écrou, grâce aux moyens d'accrochage.

En outre, le collier conforme à l'invention peut s'adapter à différents diamètres de conduite, une vis ou une tige filetée des moyens de vissage ayant préalablement été insérée dans l'ouverture de réglage la plus adaptée au diamètre de la conduite sur laquelle le collier est destiné à être monté.

Selon des caractéristiques optionnelles, prises seules ou en combinaison :
- lesdites ouvertures de réglage présentent un bord recourbé destiné à venir en butée avec la vis ou la tige filetée des moyens de vissage ;
- la zone de réception est constituée par une cavité de ladite bride souple destinée à engager avec un crochet desdits moyens d'accrochage pour assurer un blocage selon une direction transversale et longitudinale à ladite bride souple ;
- les moyens d'accrochage sont constitués par au moins deux crochets dudit corps d'accrochage, ladite bride souple présentant au moins deux zones de réception destinées à engager avec lesdits au moins deux crochets ;

- ladite bride souple présente une échancrure pour le passage des moyens de vissage (la vis) entre lesdites au moins deux zones de réception ;
- ladite au moins une zone de réception est prévue à l'une des extrémités de la bride souple ;
- les moyens de vissage comprennent un écrou se présentant sous la forme d'un élément cylindrique d'axe longitudinal orthogonal à l'axe de l'alésage taraudé dudit écrou, transverse à ladite bride souple ;
- ladite bride souple présente des butées en saillie destinées à engager avec l'écrou afin d'interdire la rotation dudit écrou par rapport à ladite bride souple lors du serrage des moyens de vissage ;
- lesdites butées sont réalisées par des embossages de ladite bride souple ;
- le collier est un collier de dérivation présentant une selle destinée à être appliquée de manière étanche via un joint, présentant une ouverture destinée à être disposée de manière étanche en regard d'un orifice de piquage de la canalisation, ou alternativement ;
- ledit collier est un collier obturateur présentant un joint d'obturation, localement sur ladite bride souple, destiné à obturer un orifice d'une canalisation, ou alternativement ;
- le collier est un collier de réparation, présentant une bande élastomère sur la surface intérieure de ladite bride souple, destiné à obturer une fuite d'une canalisation,
- les moyens de vissage sont constitués d'une vis et d'un écrou ou alternativement,
- les moyens de vissage sont constitués d'une tige filetée et de deux écrous.

L'invention sera mieux comprise à la lecture de la description suivante accompagnée de dessins en annexe parmi lesquels :
- la figure 1 est une vue de côté d'un collier de dérivation (ou collier de prise) et d'un robinet obturateur, destiné à être vissé sur le collier, conforme à l'invention selon un premier mode de réalisation,
- la figure 2 est une vue de dessus du collier tel qu'illustré, à la figure 1, une fois le robinet de dérivation vissé à un raccord du collier,
- la figure 3 est une vue de côté du collier tel qu'illustré à la figure 3, en position ouverte,
- la figure 4 est une vue de dessus du collier tel qu'illustré à la figure 3,
- la figure 5 est une vue de côté d'un collier, en position fermée, en particulier un collier obturateur, conforme à l'invention selon un second mode de réalisation,
- la figure 6 est une vue du collier tel qu'illustré à la figure 5, une fois monté sur une conduite,
- la figure 7 est une vue de dessus du collier tel qu'illustré à la figure 5, en position ouverte,
- la figure 8 est une vue de côté du collier tel qu'illustré à la figure 7,
- la figure 9 illustre un collier conforme à l'invention, en perspective, selon un troisième mode de réalisation, en particulier un collier de réparation monté sur une conduite,
- la figure 10 est une vue de côté du collier de réparation tel qu'illustré à la figure 9,
- la figure 11a est une vue de dessous de la bride souple du collier telle qu'illustrée à la figure 9,
- la figure 11b est une vue de dessus de la bride souple telle qu'illustrée à la figure 11a,
- la figure 12 est une vue de côté de la bride souple telle qu'illustrée à la figure 11 a,
- la figure 13 est une vue de côté d'un collier de dérivation et d'un robinet obturateur, destiné à être vissé sur le collier, conforme à l'invention, selon un quatrième mode de réalisation,
- la figure 14 est une vue de dessus du collier tel qu'illustré à la figure 13,
- la figure 15 est une vue d'un collier de réparation conforme à l'invention selon un cinquième mode de réalisation,
- la figure 16 est une vue de détail du système d'accrochage du collier tel qu'illustré à la figure 15.

Aussi, l'invention concerne un collier 10 ; 20; 30, destiné à ceinturer une canalisation de fluide, convenant pour soit obturer un orifice de la canalisation, soit créer une dérivation sur la canalisation, soit réparer une fissure de ladite canalisation.

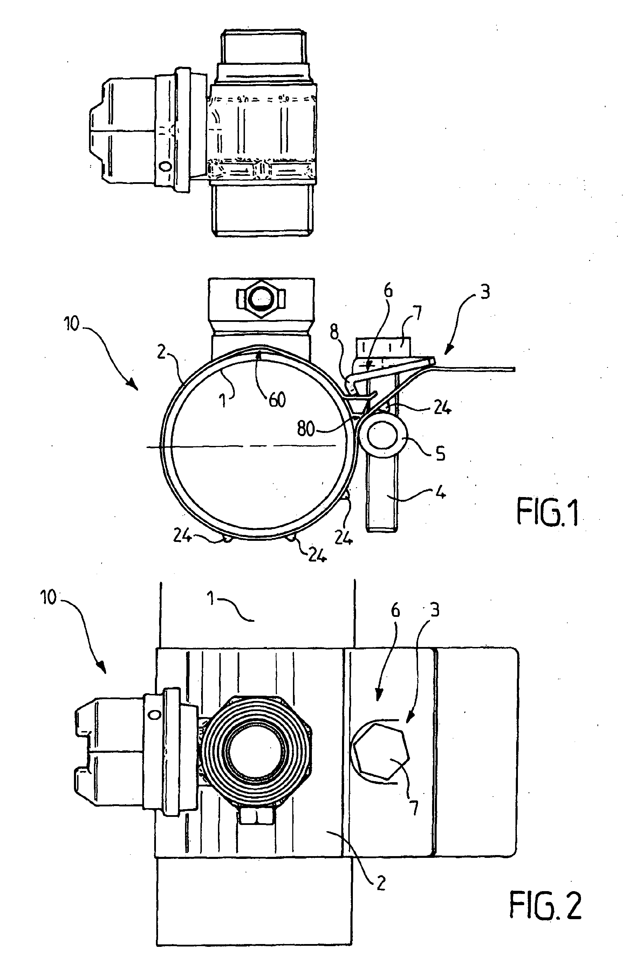

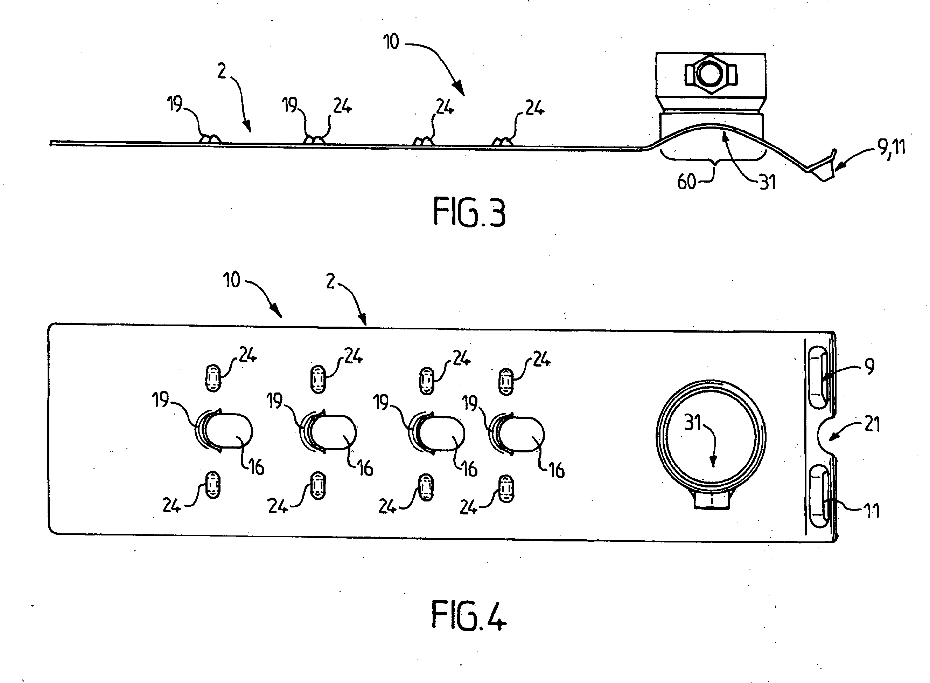

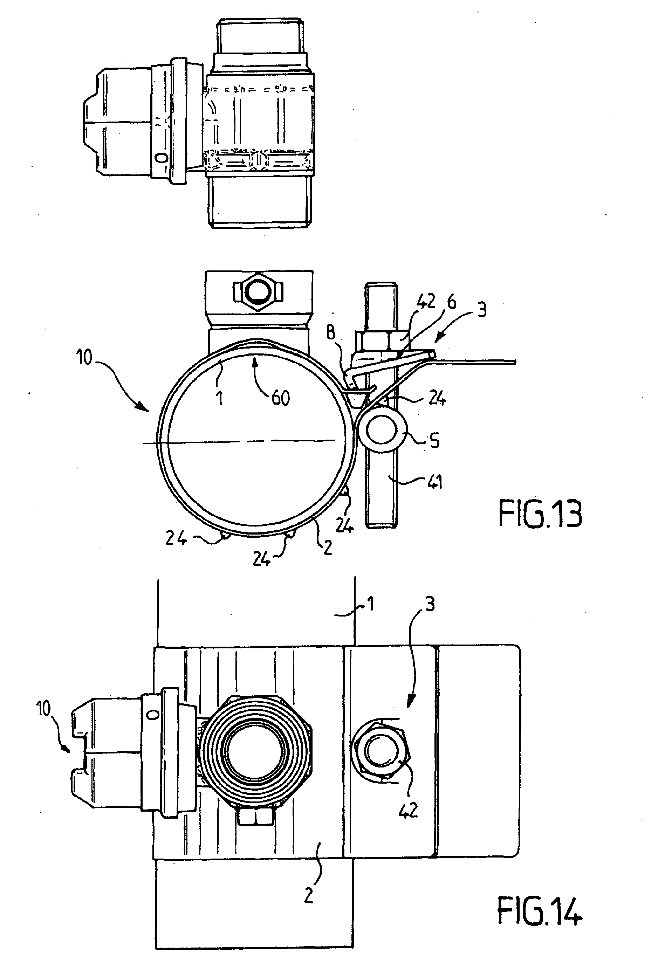

Le collier peut être, selon un mode de réalisation, un collier de dérivation, illustré selon un exemple non limitatif aux figures 1 à 4 ou encore selon un autre exemple aux figures 13 et 14. Le collier de dérivation présente une selle 60 destinée à être appliquée de manière étanche via un joint, ladite selle 60 présentant une ouverture 31 destinée à être disposée de manière étanche en regard d'un orifice de piquage de ladite canalisation.

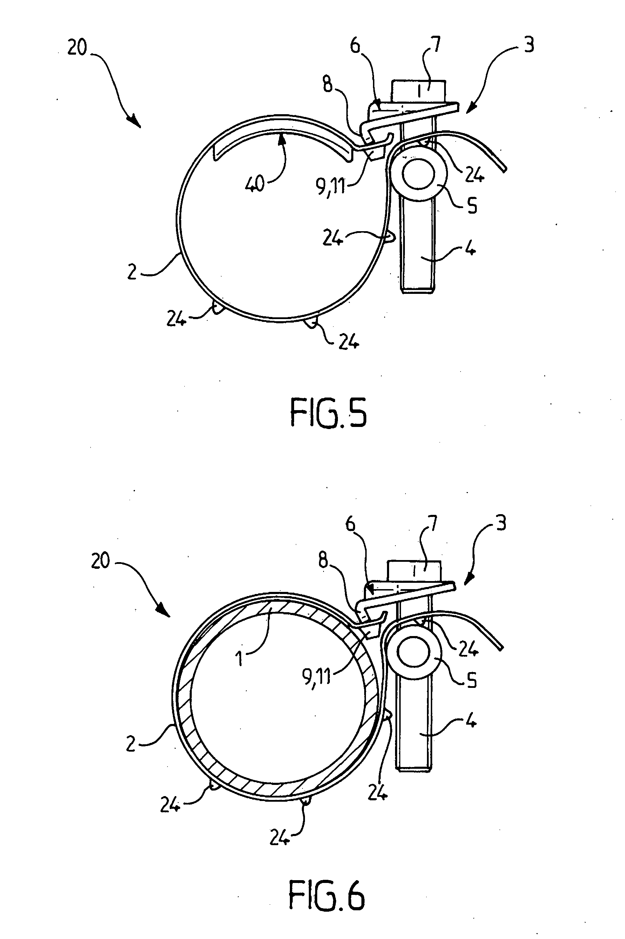

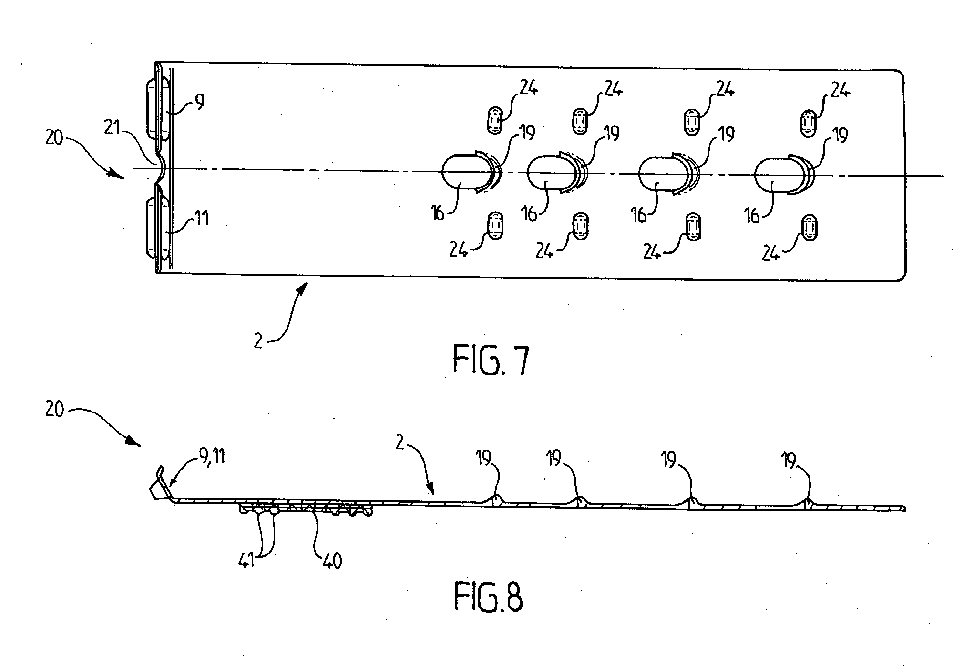

Alternativement, selon un autre mode de réalisation, illustré selon un exemple non limitatif aux figures 5 à 8, le collier peut être un collier obturateur 20 qui présente un joint d'obturation 40, localement sur ladite bride souple destinée à obturer un orifice d'une canalisation.

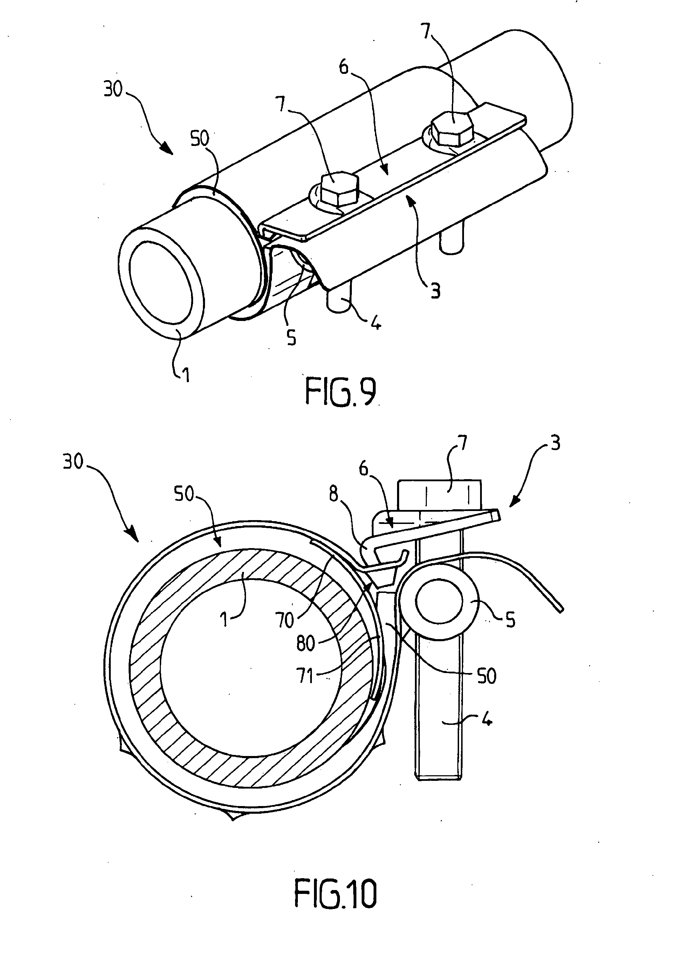

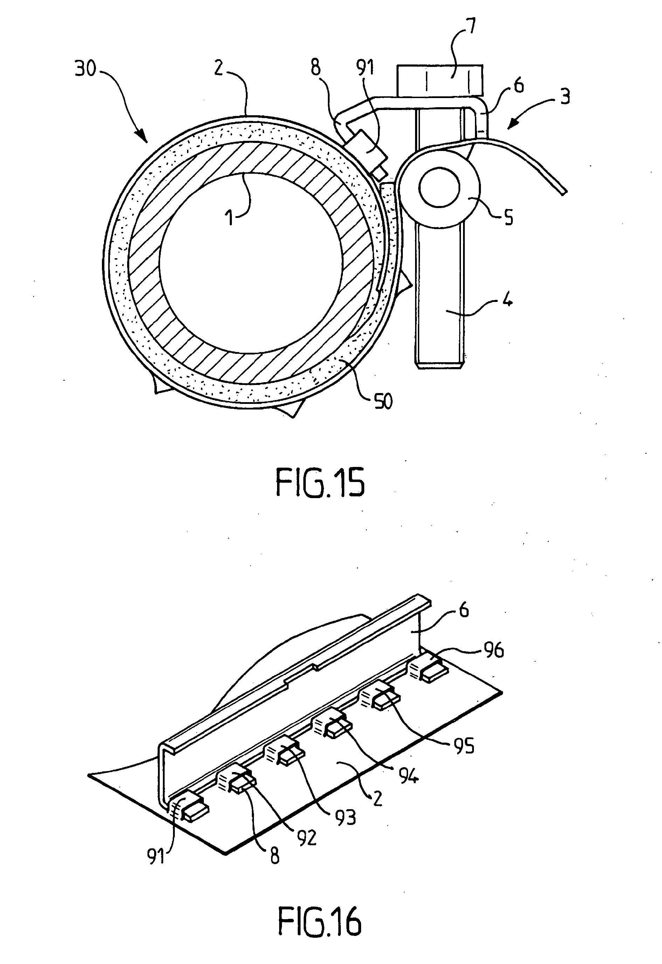

Selon un autre mode de réalisation, illustré selon un exemple non limitatif aux figures 9 à 12 ou encore selon un autre exemple aux figures 15 et 16, le collier peut être un collier de réparation, présentant une bande élastomère sur la surface interne de ladite bride souple, destiné à obturer une fuite d'une canalisation.

Dans tous les cas, le collier 10 ; 20 ; 30 comprend :
- une bride souple 2, notamment sous forme d'une bande d'acier inoxydable, destinée à ceinturer ladite canalisation,
- dès moyens de vissage 3 coopérant avec ladite bride souple pour serrer le collier sur ladite canalisation, comprenant par exemple au moins une vis 4 et un écrou 5 (figures 1 à 12 et 15, 16) ou encore une tige filetée 41 et deux écrous 5, 42 (figures 13 et 14).

Selon l'invention :
- le collier présente un corps d'accrochage 6 présentant un alésage traversé par les moyens de vissage (notamment par la vis 4 pris entre la tête 7 de la vis 4 et l'écrou 5, ou encore par la tige filetée 41 puis entre les deux écrous 6, 42) muni de moyens d'accrochage 8 destinés à coopérer avec au moins une zone de réception 9, 11 ; 12, 13, 14, 15, 91 à 96, de la bride souple pour accrocher de manière amovible ladite bride souple 2,
- le collier présente des moyens de réglage de la longueur effective de ladite bride souple comprenant une pluralité d'ouvertures 16 ; 17,18 de réglage réparties sur la longueur de ladite bride souple, destinées pour le réglage de la position des moyens de vissage 3.

En fonction du diamètre, notamment standard, de la conduite sur laquelle le collier est destiné à être monté, il est possible d'insérer la vis 4 ou la tige filetée 41 des moyens de vissage dans l'ouverture 16, 17, 18 de réglage de la bride souple la plus adaptée au diamètre de la conduite.

La pose s'effectue, de préférence en ouvrant le collier puis en le fermant grâce aux moyens d'accrochage 8 (sans dévisser complètement les moyens de vissage 3, notamment sans retirer la vis 4 de l'écrou 5). Le serrage final est obtenu par le vissage des moyens de vissage 3.

Dans tous les cas, le corps d'accrochage 6 permet d'agripper la bride souple 2 et autorise le cerclage de la canalisation 1 par la bride souple 2 sur la quasi-totalité voire la totalité de la circonférence de la canalisation 1. Par exemple tel qu'illustré aux figures le cerclage de la bride souple 2 s'effectue sur au moins sur 80% de la circonférence du collier 10 ;20 ;30.

Lorsque les moyens d'accrochage 8 du corps 6 agrippent la zone de réception de la bride souple 2 tels qu'illustrés aux figures 1,5,6 9 ou 10, le corps d'accrochage 6 ne prend pas appui sur la canalisation 1.

Dans le cas où le collier est un collier de dérivation 10, tel qu'illustré à la figure 1 notamment, ledit corps d'accrochage 6 est un élément séparé et distinct de la selle 60, qui elle appuie sur la canalisation 1.

Selon un mode de réalisation, les ouvertures de réglage 16, 17, 18 peuvent présenter un bord recourbé 19 destiné à venir en butée avec la vis 4 ou la tige filetée des moyens de vissage 3 lors du serrage du collier. Ce bord recourbé 19 est notamment obtenu, selon les exemples de réalisation, lors de la formation de la bride souple par emboutissage d'une feuille d'acier inoxydable. Ce bord recourbé 19 permet d'augmenter la surface de contact entre la bride souple et la vis (ou la tige filetée 41) afin d'obtenir une bonne répartition des efforts entre ces deux éléments.

En engageant avec l'écrou 5, ce bord recourbé 19 peut permettre d'assurer le blocage de l'écrou 5 et son bon positionnement sur la bride souple 2.

Selon un mode de réalisation illustré aux figures 1 à 14, ladite zone de réception 9, 11 ; 12, 13, 14, 15 peut être constituée par une cavité de ladite bride souple 2, destinée à engager avec un crochet de moyens d'accrochage 8 pour assurer un blocage non seulement dans la direction longitudinale de la bride souple (selon le sens d'accrochage), mais également selon une direction transversale de la bride souple.

A cet effet, on remarque que la cavité 9, 11 et 12 à 15 est dimensionnée en largeur sensiblement selon la largeur du crochet correspondant.

Alternativement, selon un autre mode de réalisation illustré aux figures 15 et 16, ladite zone de réception peut être constituée par une ou plusieurs boucle(s) 91 à 96 destinée(s) à coopérer avec un crochet des moyens d'accrochage 8.

Selon un mode de réalisation, les moyens d'accrochage peuvent être au moins constitués par au moins deux crochets du corps d'accrochage 6, la bride souple 2 présentant alors au moins deux zones de réception 9, 11 ; 12, 13, 14, 15 ; 91 à 96, correspondantes destinées à engager avec lesdits deux crochets.

Cette disposition permet, notamment lorsque chaque zone de réception est constituée par une cavité, d'augmenter le blocage latéral.

En outre, cette disposition permet lorsque le collier présente une échancrure 21, 22, 23 pour le passage de la vis 4 (voire de la tige filetée 41) d'obtenir un ceinturage optimum de la conduite, sur la quasi-totalité de la périphérie de la conduite, en limitant au maximum la zone de non contact de la bride, au niveau des moyens de vissage, sur laquelle la bride n'appuie pas sur la conduite (voir figure 1).

Selon les modes de réalisation illustrés aux figures, le corps d'accrochage 6 peut être un élément de longueur dimensionnée à la largeur de la bride souple, qui s'étend transversalement sur la largeur de la bride souple 2. Il présente une surface destinée à coopérer en butée avec la tête 7 de la vis 4 lors du serrage (figure 1), ou encore destinée à coopérer en butée avec un écrou 42 des moyens de vissage 3 (figure 13).

Selon les modes de réalisation illustrés aux figures, l'écrou 5 peut se présenter sous la forme d'un élément cylindrique d'axe longitudinal orthogonal à l'axe de l'alésage taraudé dudit écrou. L'élément cylindrique s'étend transversalement à ladite bride souple 2. L'écrou 5 est destiné à engager directement en butée avec la surface extérieure de la bride souple 2 lors du serrage. De préférence la longueur de l'élément cylindrique, constituant l'écrou, est sensiblement égale à la largeur de la bride souple 2.

Selon un mode de réalisation, afin d'interdire la rotation dudit écrou 5 par rapport à ladite bride souple 2, lors du serrage des moyens de vissage 3, ladite bride souple peut présenter des butées 24 en saillie sur la surface extérieure de ladite bride souple. Ces butées 24 peuvent avantageusement être réalisées sur la bride souple lors de la formation de la bride par emboutissage.

D'une manière générale, la bride souple 2 peut être constituée d'une bande métallique d'acier inoxydable après des opérations d'emboutissage permettant notamment la réalisation des ouvertures 16, 17, 18, voire des bords recourbés 19, des cavités 9, 11 ; 12, à 15, et des échancrures 21 ; 22, 23, ou encore des boucles 91 à 96, selon les divers modes de réalisation.

Le collier des figures 1 à 4 est un collier de dérivation 10 qui présente une selle 60 destinée à être appliquée de manière étanche via un joint. La selle présente une ouverture 31 destinée à être disposée de manière étanche en regard d'un orifice de piquage de ladite canalisation.

Ce collier de dérivation fait l'objet du dépôt d'une demande de brevet, le même jour par le demandeur.

Selon les exemples illustrés aux figures 1 à 4, la bride souple 2 et la selle 60 sont constituées par une même bande d'acier inoxydable, et permettent de ceinturer la canalisation sans discontinuité de contact entre la bride souple et ladite selle souple 60.

Le collier des figures 5 à 8 est un collier obturateur 20 qui présente sur la surface intérieure de la bride souple 2 un joint d'obturation 40 solidarisé à ladite surface intérieure, notamment par collage.

Il s'agit d'un joint 40 positionné localement sur la bride souple, notamment de forme circulaire. Le joint 40 présente une surface de contact destinée à être appliquée sur la canalisation, présentant des nervures 41 notamment circulaires, concentriques, voire notamment des nervures radiales et une autre surface solidarisée à la surface intérieure de la bride souple 2. Ce collier trouve une application particulière pour obturer un orifice sur une canalisation.

Le collier des figures 9 à 12 ou encore 15 et 16 est un collier de réparation 30. Il se distingue des colliers précédents en ce qu'il présente une bande élastomère répartie sur la surface intérieure de la bride souple recouvrant la majeure partie de celle-ci. Cette bande élastomère 50 s'étend notamment sur la largeur de la bride souple et sur une longueur suffisante de la bride souple de telle façon à pouvoir recouvrir la totalité de la périphérie de la canalisation, comme cela est illustré à la figure 10.

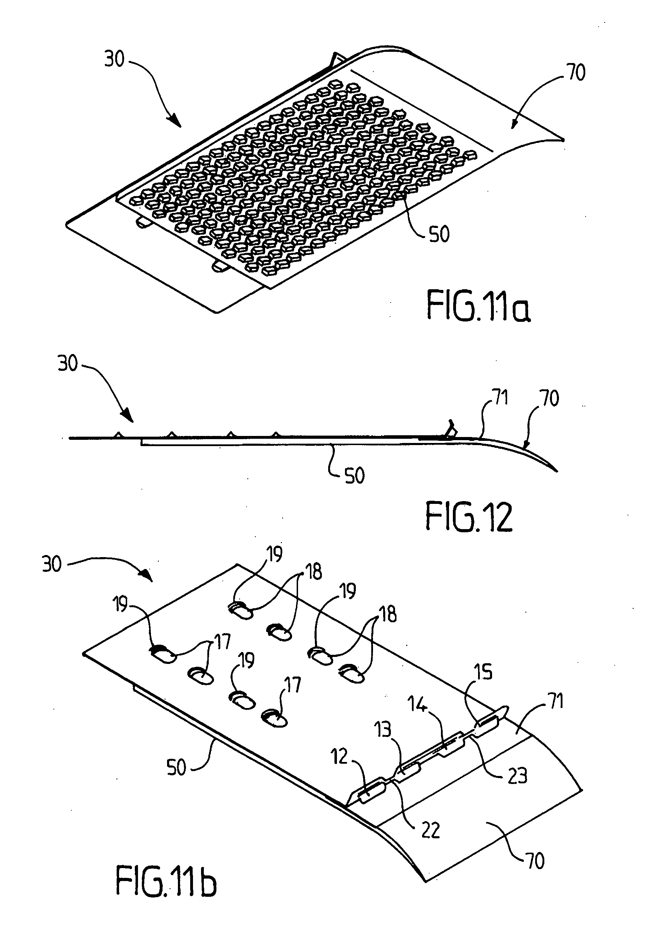

Telle qu'illustrée à la figure 12, cette bande élastomère 50 s'étend, selon les exemples illustrés, en saillie au-delà de la bride souple 2 selon une direction longitudinale de la bride souple 2 de telle façon à pouvoir assurer l'étanchéité au niveau de la zone 80 au niveau des moyens de vissage 3, tel qu'illustré à la figure 10. Cette partie de bande 70 en saillie est d'épaisseur décroissante en direction de son extrémité libre. Cette partie de bande 70 peut présenter sur sa surface extérieure une armature 71 destinée à comprimer la partie de bande 70 sur la canalisation, en évitant qu'elle ne flambe.

Ce collier de réparation 30 peut être large et peut présenter à cet effet des moyens de vissage 6 comprenant deux ensembles vis/écrou 4, 5 (voire deux ensembles tige filetée 41/écrous 5, 42) répartis sur la largeur de la bride souple, permettant d'obtenir un serrage homogène et efficace. La surface de la bande élastomère 50 destinée à faire contact avec la conduite peut présenter des reliefs tels que par exemple nids d'abeilles comme illustré à la figure 11a. L'autre surface est solidarisée, notamment par collage à la bride souple 2.

Le mode de réalisation des figures 13 et 14 se distingue des autres exemples illustrés en ce que les moyens de vissage 3 sont constitués d'une tige filetée 41 et de deux écrous 5, 42.

L'un 5 des écrous peut être ledit écrou tel que précédemment décrit, constitué par une pièce cylindrique, destiné lors du vissage à engager avec la bride souple 2 afin d'éviter la rotation entre cet écrou 5 et la bride souple 2.

Au contraire, l'autre écrou 42, notamment hexagonal est destiné à coopérer avec un outil de vissage tel qu'une clef. Avantageusement, cet écrou 42 peut être pourvu d'un frein (écrou connu sous l'appellation Nylstop).

Au début, lors du vissage, la rotation de l'écrou 42 entraîne conjointement la rotation de la tige filetée 41. Le vissage s'effectue donc entre la tige filetée 41 et l'écrou 5. A partir d'un certain effort, les frottements entre la bride souple 2 et la tige filetée 41 engendrent un couple résistant supérieur au couple de freinage de l'écrou 42. Dès lors, le vissage se poursuit entre l'écrou 42 et la tige filetée 41.

Naturellement, d'autres moyens de mise en oeuvre auraient pu être envisagés par l'homme du métier sans pour autant sortir du cadre de l'invention définie par les revendications ci-après.

## Revendications

1. Collier (10 ; 20 ; 30), destiné à ceinturer une canalisation de fluide (1), convenant pour soit obturer un orifice de la canalisation, soit créer une dérivation sur la canalisation, soit réparer une fissure de ladite canalisation, ledit collier (10 ; 20 ; 30) comprenant :
- une bride souple (2) destinée à ceinturer ladite canalisation,
- des moyens de vissage (3) coopérant avec ladite bride souple (2) pour serrer ledit collier sur ladite canalisation (1),
**caractérisé en ce que :**
- lesdits moyens de vissage comprennent une vis (4) et un écrou (5), ou alternativement une tige filetée et deux écrous (5,42), le vissage de la vis(4) sur l'écrou (5), ou desdits écrous (5,42) sur ladite tige filetée (41) permettant de serrer le collier sur la canalisation (1),
- ledit collier (10 ;.20 ; 30) présente un corps d'accrochage (6) présentant un alésage traversé par lesdits moyens de vissage (3) muni de moyens d'accrochage (8) destinés à coopérer avec au moins une zone de réception (9, 11 ;12, 13, 14, 15, 91 à 96) de la bride souple (2) pour accrocher de manière amovible ladite bride souple (2), de telle façon à autoriser l'ouverture du collier sans dévisser complètement lesdits moyens de vissage (3),
- ledit collier (10 ; 20 ; 30) présente des moyens de réglage de la longueur effective de ladite bride souple (2) comprenant une pluralité d'ouvertures (16 ; 17, 18) de réglage réparties sur la longueur de ladite bride souple, destinées pour le réglage de la position des moyens de vissage (3), ladite vis (4) ou alternativement ladite tige filetée (41) étant destinée à être insérée dans l'ouverture de réglage la plus adaptée au diamètre de la canalisation (1),
et dans lequel lorsque lesdits moyens d'accrochage (8) agrippent la zone de réception de la bride souple (2), ledit collier (10 ; 20 ; 30) permet de ceinturer la canalisation dans une position dudit corps d'accrochage (6) où ledit corps d'accrochage (6) ne prend pas appui sur la canalisation (1), le corps d'accrochage (6) coopérant en butée avec la tête de la vis (4), ou alternativement, avec l'un (42) des deux écrous (4,42) vissés sur la tige filetée (41), et dans lequel l'écrou (5) coopérant avec la vis (4) ou alternativement, l'autre (5) des deux écrous (5,42) vissés sur ladite tige filetée (41) étant destiné à engager en butée sur la surface extérieure de la bride souple (2)

2. Collier selon la revendication 1, dans lequel lesdites ouvertures de réglage (16 ; 17, 18) présentent un bord recourbé (19) destiné à venir en butée avec une vis (4) ou une tige filetée (41) des moyens de vissage (3).

3. Collier selon la revendication 1 ou 2, dans lequel ladite zone de réception (9, 11 ; 12, 13, 14, 15) est constituée par une cavité de ladite bride souple (2), destiné à engager avec un crochet desdits moyens d'accrochage (8) pour assurer un blocage selon une direction transversale.et longitudinale à ladite bride souple (2).

4. Collier selon l'une des revendications 1 à 3, dans lequel lesdits moyens d'accrochage (8) sont constitués par au moins deux crochets dudit corps d'accrochage (6), ladite bride souple (2) présentant au moins deux zones de réception (9, 11 ; 12, 13, 14, 15, 91 à 96) destinées à engager avec lesdits au moins deux crochets.

5. Collier selon la revendication 4, dans lequel ladite bride souple (2) présente une échancrure (21 ; 22, 23) pour le passage des moyens de vissage (3) entre lesdites au moins deux zones de réception (9, 11 ; 12, 13, 14, 15).

6. Collier selon l'une des revendications 1 à 5, dans lequel ladite au moins une zone de réception (9, 11 ; 12, 13, 14, 15, 91 à 96) est prévue à l'une des extrémités de la bride souple (2).

7. Collier selon l'une des revendications 1 à 6, dans lequel l'écrou (5) desdits moyens de vissage (3) destiné à coopérer en butée avec la bride souple se présente sous la forme d'un élément cylindrique d'axe longitudinal orthogonal à l'axe de l'alésage taraudé dudit écrou (5), transverse à ladite bride souple (2).

8. Collier selon la revendication 1 à 7, dans lequel ladite bride souple présente des butées (24) en saillie destinées à engager avec ledit écrou (5) des moyens de vissage (3) coopérant en butée avec la bride souple, lesdites butées (24) permettant d'interdire la rotation dudit écrou (5) par rapport à ladite bride souple (2) lors du serrage des moyens de vissage (3), lesdites butées (24) étant réalisées par des embossages de ladite bride souple (2).

9. Collier selon l'une des revendications 1 à 8, dans lequel ledit collier est un collier de dérivation (10) présentant une selle (60) destinée à être appliquée de manière étanche via un joint, présentant une ouverture (31) destinée à être disposée de manière étanche en regard d'un orifice de piquage de ladite canalisation.

10. Collier selon l'une des revendications 1 à 8, dans lequel ledit collier est un collier obturateur (20), présentant un joint d'obturation (40), localement sur ladite bride souple, destiné à obturer un orifice d'une canalisation.

11. Collier selon l'une des revendications 1 à 8, dans lequel ledit collier est un collier de réparation (30), présentant une bande d'élastomère (50) sur la surface intérieure de ladite bride souple (2), destiné à obturer une fuite d'une canalisation.

12. Collier selon l'une des revendications 1 à 11, dans lequel les moyens de vissage (3) sont constitués d'une vis (4) et d'un écrou (5).

13. Collier selon l'une des revendications 1 à 11, dans lequel les moyens de vissage (3) sont constitués d'une tige filetée (41) et de deux écrous (5, 42).

14. Collier selon la revendication 13, dans lequel l'un (42) des écrous (5, 42) est équipé d'un frein, de telle façon qu'au début du vissage la rotation de l'écrou (42) entraîne conjointement la tige filetée (41) et ainsi le vissage entre la tige filetée (41) et l'autre écrou (5) destiné à coopérer en butée avec la bride souple (2), puis à partir d'un certain effort le vissage se poursuit entre l'écrou (42) et la tige filetée (41).

15. Utilisation du collier selon l'une des revendications 1 à 14 sur une canalisation de fluide pour soit obturer un orifice de la canalisation, soit créer une dérivation sur la canalisation, soit réparer une fissure de ladite canalisation.

## Patentansprüche

1. Schelle (10; 20; 30) zur Ummantelung eines Rohrs zur Beförderung eines Fluids (1), die geeignet ist, um entweder eine Öffnung des Rohrs zu verschließen oder eine Abzweigung auf dem Rohr zu erstellen oder einen Riss des Rohrs zu reparieren, wobei die Schelle (10; 20; 30) Folgendes aufweist:
- eine flexible Lasche (2), die dazu bestimmt ist, das Rohr zu ummanteln,
- Schraubmittel (3), die mit der flexiblen Lasche (2) zusammenwirken, um die Schelle auf dem Rohr (1) festzuklemmen,
**dadurch gekennzeichnet, dass**:
- die Schraubmittel eine Schraube (4) und eine Mutter (5) oder alternativ eine Gewindestange und zwei Muttern (5, 42) aufweisen, wobei das Festschrauben der Schraube (4) auf der Mutter (5) oder der Muttern (5, 42) auf der Gewindestange (41) ermöglicht, die Schelle auf dem Rohr (1) festzuklemmen,
- die Schelle (10; 20; 30) einen Einhängekörper (6) aufweist, der eine Bohrung aufweist, durch die die Schraubmittel (3) durchgehen, der mit Einhängemitteln (8) versehen ist, die dazu bestimmt sind, mit mindestens einem Bereich zum Aufnehmen (9, 11; 12, 13, 14, 15, 91 bis 96) der flexiblen Lasche (2) zusammenwirken, um die flexible Lasche (2) derart abnehmbar einzuhängen, dass das Öffnen der Schelle ermöglicht wird, ohne die Schraubmittel (3) vollständig abzuschrauben,
- die Schelle (10; 20; 30) Mittel zum Einstellen der tatsächlichen Länge der flexiblen Lasche (2) aufweist, die mehrere Öffnungen (16; 17, 18) zum Einstellen aufweist, die auf der Länge der flexiblen Lasche verteilt sind, die zum Einstellen der Position der Schraubmittel (3) bestimmt sind, wobei die Schraube (4) oder alternativ die Gewindestange (41) dazu bestimmt ist, in die Öffnung zum Einstellen eingefügt zu werden, die für den Durchmesser des Rohres (1) am besten geeignet ist,
und wobei, wenn die Einhängemittel (8) den Bereich zum Aufnehmen der flexiblen Lasche (2) greifen, die Schelle (10; 20; 30) ermöglicht, das Rohr in einer Position des Einhängekörpers (6) zu ummanteln, in der sich der Einhängekörper (6) nicht auf das Rohr (1) stützt, wobei der Einhängekörper (6) am Anschlag mit dem Kopf der Schraube (4) oder alternativ mit der einen (42) der zwei Muttern (4, 42), die auf die Gewindestange (41) geschraubt sind, zusammenwirkt, und wobei die Mutter (5), die mit der Schraube (4) zusammenwirkt, oder alternativ die andere (5) der zwei Muttern (5, 42), die auf die Gewindestange (41) geschraubt ist, dazu bestimmt ist, im Anschlag auf die Außenfläche der flexiblen Lasche (2) einzugreifen.

2. Schelle nach Anspruch 1, wobei die Öffnungen zum Einstellen (16; 17, 18) einen gebogenen Rand (19) aufweisen, der dazu bestimmt ist mit einer Schraube (4) oder einer Gewindestange (41) der Schraubmittel (3) in Anschlag zu kommen.

3. Schelle nach Anspruch 1 oder 2, wobei der Bereich zum Aufnehmen (9, 11; 12, 13, 14, 15) durch einen Hohlraum der flexiblen Lasche (2) gebildet ist, die dazu bestimmt ist, mit einem Haken der Einhängemittel (8) einzugreifen, um ein Blockieren entlang einer Quer- und Längsrichtung an der flexiblen Lasche (2) zu gewährleisten.

4. Schelle nach einem der Ansprüche 1 bis 3, wobei die Einhängemittel (8) aus mindestens zwei Haken des Einhängekörpers (6) gebildet sind, wobei die flexible Lasche (2) mindestens zwei Bereiche zum Aufnehmen (9, 11; 12, 13, 14, 15, 91 bis 96) aufweist, die dazu bestimmt sind, mit den mindestens zwei Haken einzugreifen.

5. Schelle nach Anspruch 4, wobei die flexible Lasche (2) eine Aussparung (21; 22, 23) für den Durchgang der Schraubmittel (3) zwischen den mindestens zwei Bereichen zum Aufnehmen (9, 11; 12, 13, 14, 15) aufweist.

6. Schelle nach einem der Ansprüche 1 bis 5, wobei der mindestens eine Bereich zum Aufnehmen (9, 11; 12, 13, 14, 15, 91 bis 96) an einem der Enden der flexiblen Lasche (2) vorgesehen ist.

7. Schelle nach einem der Ansprüche 1 bis 6, wobei die Mutter (5) der Schraubmittel (3), die dazu bestimmt ist, im Anschlag mit der flexiblen Lasche zusammenzuwirken, die Form eines zylindrischen Elements mit Längsachse, die orthogonal zu der Achse der Gewindebohrung der Mutter (5) ist, aufweist, das quer zu der flexiblen Lasche (2) ist.

8. Schelle nach Anspruch 1 bis 7, wobei die flexible Lasche vorspringende Anschläge (24) aufweist, die dazu bestimmt sind, mit der Mutter (5) der Schraubmittel (3) einzugreifen, die im Anschlag mit der flexiblen Lasche zusammenwirken, wobei die Anschläge (24) gestatten, die Drehung der Mutter (5) gegenüber der flexiblen Lasche (2) beim Festziehen der Schraubmittel (3) zu verhindern, wobei die Anschläge (24) durch Prägungen der flexiblen Lasche (2) gebildet sind.

9. Schelle nach einem der Ansprüche 1 bis 8, wobei die Schelle eine Abzweigschelle (10) ist, die einen Sattel (60) aufweist, der dazu bestimmt ist, über eine Dichtung dicht angebracht zu werden, die eine Öffnung (31) aufweist, die dazu bestimmt ist, dicht gegenüber einer Anschlussöffnung des Rohrs angeordnet zu werden.

10. Schelle nach einem der Ansprüche 1 bis 8, wobei die Schelle eine Verschlussschelle (20) ist, die eine Verschlussdichtung (40) lokal auf der flexiblen Lasche aufweist, die dazu bestimmt ist, eine Öffnung eines Rohres zu verschließen.

11. Schelle nach einem der Ansprüche 1 bis 8, wobei die Schelle eine Reparaturschelle (30) ist, die einen Elastomerstreifen (50) auf der Innenfläche der flexiblen Lasche (2) aufweist, die dazu bestimmt ist, ein Leck eines Rohrs zu verschließen.

12. Schelle nach einem der Ansprüche 1 bis 11, wobei die Schraubmittel (3) aus einer Schraube (4) und einer Mutter (5) gebildet sind.

13. Schelle nach einem der Ansprüche 1 bis 11, wobei die Schraubmittel (3) aus einer Gewindestange (41) und zwei Muttern (5, 42) gebildet sind.

14. Schelle nach Anspruch 13, wobei die eine (42) der Muttern (5, 42) mit einer Bremse ausgestattet ist, so dass die Drehung der Mutter (42) am Anfang des Festschraubens gemeinsam die Gewindestange (41) und somit das Festschrauben zwischen der Gewindestange (41) und der anderen Mutter (5) antreibt, die dazu bestimmt ist, im Anschlag mit der flexiblen Lasche (2) zusammenzuwirken, und dann das Festschrauben ab einem bestimmten Aufwand zwischen der Mutter (42) und der Gewindestange (41) fortgesetzt wird.

15. Verwendung der Schelle nach einem der Ansprüche 1 bis 14 an einem Rohr zur Beförderung eines Fluids, um entweder eine Öffnung des Rohrs zu verschließen oder eine Abzweigung an dem Rohr zu erstellen oder einen Riss des Rohrs zu reparieren.

## Claims

1. Collar (10; 20; 30) intended to encircle a fluid pipe (1), suitable for either closing off an orifice in the pipe or creating a bypass on the pipe, or repairing a crack in said pipe, said collar (10; 20; 30) comprising:
- a flexible flange (2) intended to encircle said pipe,
- screwing means (3) cooperating with said flexible flange (2) in order to clamp said collar on said pipe (1),
**characterised in that**:
- said screwing means comprise a screw (4) and a nut (5), or alternatively a threaded rod and two nuts (5, 42), the screwing of the screw (4) on the nut (5) or of said nuts (5, 42) on said threaded rod (41) clamping the collar on the pipe (1),
- said collar (10; 20; 30) has an attachment body (6) having a bore through which said screwing means (3) pass, provided with attachment means (8) intended to cooperate with at least one reception zone (9, 11; 12, 13, 14, 15, 91 to 96) of the flexible flange (2) in order to removably attach said flexible flange (2), so as to make it possible to open the collar without completely unscrewing said screwing means (3),
- said collar (10; 20; 30) has means for adjusting the effective length of said flexible flange (2) comprising a plurality of adjustment openings (16; 17, 18) distributed over the length of said flexible flange, intended for adjusting the position of the screwing means (3), said screw (4) or alternatively said threaded rod (41) being intended to be inserted in the adjustment opening most suited to the diameter of the pipe (1),
and wherein, when said attachment means (8) grip the reception zone of the flexible flange (2), said collar (10; 20; 30) makes it possible to encircle the pipe in a position of said attachment body (6) where said attachment body (6) does not bear on the pipe (1), the attachment body (6) cooperating in abutment with the head of the screw (4) or alternatively with one (42) of the of the two nuts (4, 42) screwed on the threaded rod (41), and wherein the nut (5) cooperating with the screw (4) or alternatively the other one (5) of the two nuts (5, 42) screwed onto said threaded rod (41) being intended to engage in abutment on the external surface of the flexible flange (2).

2. Collar according to claim 1, wherein said adjustment openings (16; 17, 18) have a curved edge (19) intended to come into abutment with a screw (4) or a threaded rod (41) of the screwing means (3).

3. Collar according to claim 1 or 2, wherein said reception zone (9, 11; 12, 13, 14, 15) consists of a cavity in said flexible flange (2) intended to engage with a hook on said attachment means (8) in order to provide locking in a direction transverse and longitudinal to said flexible flange (2).

4. Collar according to one of claims 1 to 3, wherein said attachments means (8) are formed by at least two hooks on said attachment body (6), said flexible flange (2) having at least two reception zones (9, 11; 12, 13, 14, 15, 91 to 96) intended to engage with said at least two hooks.

5. Collar according to claim 4, wherein said flexible flange (2) has a recess (21; 22, 23) for the screwing means (3) to pass between said at least two reception zones (9, 11;12,13,14,15).

6. Collar according to one of claims 1 to 5, wherein said at least one reception zone (9, 11; 12, 13, 14, 15, 91 to 96) is provided at one of the ends of the flexible flange (2).

7. Collar according to one of claims 1 to 6, wherein the nut (5) of said screwing means (3) intended to cooperate in abutment with the flexible flange is in the form of a cylindrical element with a longitudinal axis orthogonal to the axis of the threaded bore of said nut (5), transverse to said flexible flange (2).

8. Collar according to claims 1 to 7, wherein said flexible flange has projecting stops (24) intended to engage with said nut (5) of the screwing means (3) cooperating in abutment with the flexible flange, said stops (24) preventing rotation of said nut (5) with respect to said flexible flange (2) when the screwing means (3) are tightened, said stops (24) being implemented by protrusions on said flexible flange (2).

9. Collar according to one of claims 1 to 8, wherein said collar is a bypass collar (10) having a seat (60) intended to be applied sealingly via a gasket, having an opening (31) intended to be disposed sealingly opposite a tapping orifice on said pipe.

10. Collar according to one of claims 1 to 8, wherein said collar is an obturating collar (20), having an obturation seal (40), locally on said flexible flange, intended to close off an orifice on a pipe.

11. Collar according to one of claims 1 to 8, wherein said collar is a repair collar (30), having a band of elastomer (50) on the internal surface of said flexible flange (2), intended to close off a leakage on the pipe.

12. Collar according to one of claims 1 to 11, wherein the screwing means (3) consist of a screw (4) and a nut (5).

13. Collar according to one of claims 1 to 11, wherein the screwing means (3) consist of a threaded rod (41) and two nuts (5, 42).

14. Collar according to claim 13, wherein one (42) of the nuts (5, 42) is equipped with a locking device so that, at the start of the screwing, the rotation of the nut (42) conjointly drives the threaded rod (41) and thus causes the screwing between the threaded rod (41) and the other nut (5) intended to cooperate in abutment with the flexible flange (2), and then, using a certain force, the screwing continues between the nut (42) and the threaded rod (41).

15. Use of the collar according to one of claims 1 to 14 on a fluid pipe in order to either close off an orifice on the pipe, or to create a bypass on the pipe, or to repair a crack on said pipe.
